# EUROPEAN PATENT SPECIFICATION

(11) **EP 2 785 967 B1**
(45) Date of publication and mention of the grant of the patent: **12.10.2016**
(21) Application number: 12791500.7
(22) Date of filing: 29.11.2012
(51) Int. Cl.: E21B 37/00, E21B 27/02, E21B 37/06

(54) **A CLEANING TOOL AND A METHOD FOR TREATING AN INNER SURFACE OF A CASING**
REINGUNGSWERKZEUG UND VERFAHREN ZUM BEARBEITEN EINER INNENFLÄCHE EINES GEHÄUSES
OUTIL DE NETTOYAGE ET PROCÉDÉ DE TRAITEMENT D'UNE SURFACE INTERNE D'UN TUBAGE

(30) Priority: 30.11.2011 EP 11191284
(43) Date of publication of application: 08.10.2014
(73) Proprietor: Welltec A/S, 3450 Allerød (DK)
(72) Inventor: HALLUNDBÆK, Jørgen, DK-3230 Græsted (DK)
(74) Representative: Hoffmann Dragsted A/S
(86) International application number: PCT/EP2012/073914
(87) International publication number: WO 2013/079572

(56) References cited:
- EP-A2- 0 450 170
- US-A- 2 619 180
- US-A1- 2004 099 418

## Description

### Field of the invention

The present invention relates to a cleaning tool for cleaning and treating an inner surface of a downhole casing and to a method for treating an inner surface of a casing by means of the cleaning tool.

### Background art

Downhole borehole operations are becoming more and more sophisticated with regard to tool operations, but also with regard to the complexity of borehole casing parts, such as valves, sliding sleeves, production zones, etc. This increased complexity results in an increased demand for solutions as to how to avoid undesirable effects, such as corrosion and fouling of the borehole casing parts. Chemical incrustation is a major cause of decreased well performance and eventual failure. Fouling can be described as clogging and failure of mechanical downhole parts, e.g. due to creation of scale, debris or similar elements. The effect of the precipitating and depositing of minerals can plug and close valves and sliding sleeves within a relatively short period of time. Hence, a need exists for an effective method for avoiding corrosion, depositing or fouling in downhole environments. Prior art document EP 0 450 170 A2 discloses a cleaning tool for cleaning an inner surface of a downhole tubular.

### Summary of the invention

It is an object of the present invention to wholly or partly overcome the above disadvantages and drawbacks of the prior art. More specifically, it is an object to provide a tool for cleaning a well and a method of preventing fouling which are cheaper and less toxic than tools and methods associated with chemical cleaning.

The above objects, together with numerous other objects, advantages, and features, which will become evident from the below description, are accomplished by a solution in accordance with the present invention by a cleaning tool for cleaning and treating an inner surface of a downhole casing according to independent claim 1.

In an embodiment, the cleaning tool may further comprise an inlet for letting well fluid into the tool.

In another embodiment, the cleaning tool may further comprise a mixing chamber for mixing the well fluid with the enzyme-containing fluid before the fluid is ejected out through the nozzle head.

In another embodiment, the cleaning tool may further comprise a flow-hindering element arranged outside the housing, expandable against the inner surface of the casing so as to divide the casing into a first casing part and a second casing part.

The flow-hindering element may be a sweeper sweeping the inner surface of the casing after the mechanical cleaning tool section has released elements of the inner surface.

Furthermore, the cleaning tool may further comprise a sweeper sweeping the inner surface of the casing after the mechanical cleaning tool section has released elements of the inner surface.

Moreover, the mechanical cleaning elements may be brushes.

In an embodiment, the cleaning tool as described above may further comprise an inlet for letting well fluid into the tool, which inlet is in fluid communication with the nozzle through a valve so as to clean the inner surface before the inner surface is treated with enzyme-containing fluid.

Furthermore, the nozzle head may be extendable radially from the tool housing for contacting the inner surface of the casing with the enzyme-containing fluid.

Additionally, the jetting tool may further comprise a hydraulic control unit for controlling rotation of the nozzle head.

Having a hydraulic control unit for controlling which nozzles are ejecting fluid ensures that the nozzles not facing the object to be cleaned are not ejecting fluid and that all the pressure in the fluid is used for ejecting fluid through the nozzle/nozzles facing the object to be cleaned. Thus, no energy of the pressurised fluid is wasted on nozzles not facing the object to be cleaned, and/or no energy is wasted on rotating the nozzle head. Furthermore, by controlling which nozzle/nozzles is/are allowed to eject fluid, it is possible to ensure that only one or few of the nozzles is/are in fact ejecting fluid, and the pressure of the fluid ejected from that or those nozzles is thus significantly higher than if the fluid was ejected through all the nozzles at the same time, even if the object to be cleaned is extending along the entire circumference of the casing. In this way, each nozzle is able to clean harder materials, such as scales, than nozzles of prior art tools where most of the energy of the pressurised fluid is used for rotating the nozzles.

In one embodiment, the hydraulic control unit may comprise a motor for breaking the free rotation of the nozzle head.

Moreover, the mechanical cleaning tool section may comprise a pumping device for pumping fluid containing elements released by the brushes and ejecting the fluid through an outlet of a first end or a second end of the cleaning tool.

The cleaning tool as described above may further comprise a coating tool section for coating the inner surface of the casing.

Furthermore, the coating tool section may comprise a brush arranged on a projectable brush arm and wherein coating is ejected through openings in the brush and the brush arm is rotated around a tool axis for contacting an inner surface of the casing with the coating.

Also, the cleaning tool as described above may further comprise a driving unit for propelling the tool forward in the casing.

Additionally, the tool may further comprise a wax fluid chamber comprising fluid containing wax particles.

In an embodiment, the wax particles may comprise ceramic particles having a significantly higher density than the wax.

Furthermore, the wax particles may comprise magnetic particles, and the wax particles comprising magnetic particles may be retained near the casing wall due to magnetic attraction between the casing and the magnetic particles.

Said inner surface may be comprised in an oil and gas well drilling system.

The present invention furthermore relates to a method for treating an inner surface of a casing by means of the cleaning tool according to any of the preceding claims, wherein the contact of the inner surface of the downhole casing with an enzyme comprises the steps of:
- providing an enzyme-containing fluid in the fluid chamber of the jetting tool,
- cleaning the casing to remove rigid debris and other precipitated materials, such as scales, by applying a mechanical cleaning tool section comprising brushes for brushing the inner surface of a casing downhole in order to clean the casing to become substantially free from any elements, such as rigid debris and other precipitated materials,
- jetting the fluid through the nozzle head towards the inner surface of the casing in a jet stream, and
- contacting the inner surface of the casing with the enzyme-containing fluid in a jet stream.

Moreover, the contact of the inner surface of the downhole casing with an enzyme may comprise the steps of providing a fluid containing enzymes in a fluid chamber of a jetting tool, activating a pumping device in the jetting tool and pressurising the fluid chamber of the jetting tool, jetting the fluid through a nozzle head towards the inner surface of the casing in a jet stream, and contacting the inner surface of the casing with an enzyme in a jet stream.

Further, the fluid chamber may be cooled. Since the activity of the enzymes may be deteriorated by elevated temperatures, the fluid chamber containing enzymes may be cooled to below a critical temperature, such that all enzymes are viable when applied downhole in the borehole. Temperature fluctuations downhole may be caused by various different effects, such as high temperature fluids flowing past the tool, high temperature regions of the formation, e.g. due to proximity of magma layers, explosions during perforations and so on. Therefore, temperature control of the fluid chamber may help avoid damages to the enzymes downhole.

Moreover, the method as described above may further comprise a final step of arranging a wax layer on the inner surface of the casing, the method comprising the steps of providing a fluid containing wax particles in a first casing part, activating a pumping device and pressurising the first casing part, jetting the fluid containing wax particles through the nozzle head towards the inner surface of the casing in the second casing part in a jet stream, and arranging the wax layer on the inner surface of the casing by the jet stream.

In one embodiment, the particles may be made of metal.

The method as described above may further comprise a final step of arranging a layer of nanoparticles on the inner surface of the casing, comprising the steps of providing a liquid containing nanoparticles in a first casing part, activating a pumping device and pressurising the first casing part, jetting the liquid through a nozzle head towards the inner surface of the casing in the second casing part in a jet stream, and arranging the layer of nanoparticles on the inner surface of the casing by the jet stream.

In addition, the method as described above may further comprise an initial step of preparing surfaces of downhole casing parts, such as casings, pipes, tubes, valves, plugs and collars, which may come into contact with borehole fluids, comprising the steps of coating an inner surface of a casing part with a nanocover material, and mounting the coated casing part to the casing.

Finally, the method as described above may further comprise a step of preparing surfaces of downhole casing parts, such as casings, pipes, tubes, valves, plugs and collars, which may come into contact with borehole fluids, comprising the steps of lowering a coating tool into the borehole, and coating at least a surface of a casing part with a nanocover material.

In one embodiment, the nanocover material may be graphene.

Moreover, the nanocover may be below 500 nanometers in thickness, such as below 100 nm, such as below 50 nm, such as below 20nm, such as below 10nm.

### Brief description of the drawings

The invention and its many advantages will be described in more detail below with reference to the accompanying schematic drawings, which for the purpose of illustration show some non-limiting embodiments and in which
Fig. 1 shows a partly cross-sectional view of a tool according to the invention,
Fig. 2 shows another embodiment of the tool having brushes for cleaning an inner surface of a borehole casing,
Fig. 3 shows another embodiment of the tool having a jetting tool section for cleaning the inner surface of the borehole casing,
Fig. 4 shows yet another embodiment of the tool for cleaning the inner surface of the borehole casing,
Fig. 5 shows an embodiment of the tool arranged in a section of the borehole casing comprising a mechanical sliding sleeve,
Fig. 6 shows yet another embodiment of the tool,
Fig. 7 shows yet another embodiment of the tool, and
Fig. 8 shows yet another embodiment of the tool for cleaning and coating the inner surface of the borehole casing.

All the figures are highly schematic and not necessarily to scale, and they show only those parts which are necessary in order to elucidate the invention, other parts being omitted or merely suggested.

### Detailed description of the invention

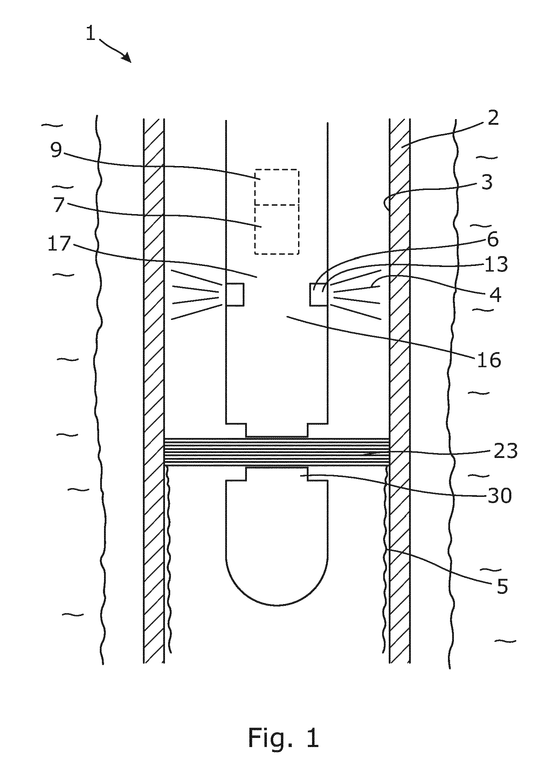

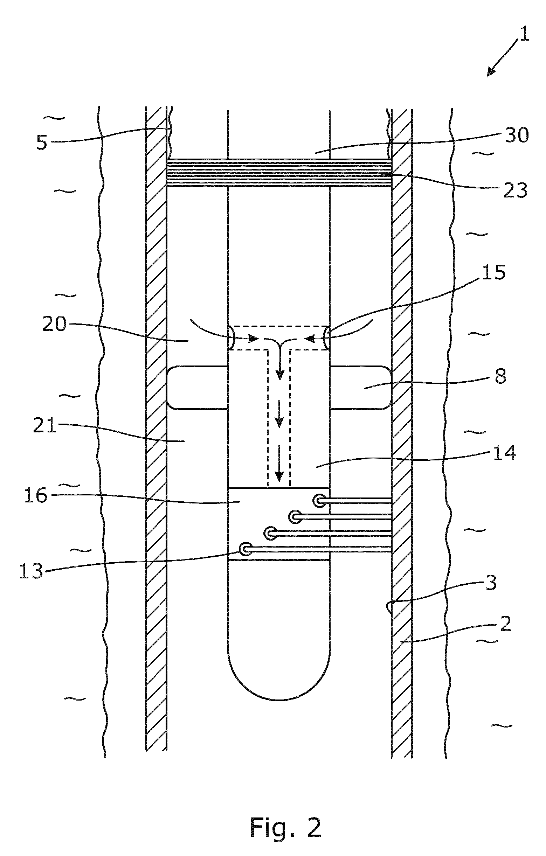

The present invention relates to a cleaning tool 1 for inhibiting corrosion or degrading of a downhole casing 2 by hindering scale 5 being deposited on an inner surface of the casing. Fig. 1 shows how an enzyme-containing fluid 4 is ejected from an ejecting member 6 or nozzles 13 comprised in a nozzle head 16 of the cleaning tool 1. By ejecting the enzyme-containing fluid 4 towards the inner surface 3 of the borehole casing 2, the enzymes come into contact with the inner surface 3. To hinder any future deposits of scale 5 or similar layers on the inner surface, the enzyme-containing fluid 4 needs to contact a clean surface, and to this effect, an initial cleaning step of releasing the rigid scale or debris and other deposit materials may be carried out. This cleaning step may be performed by a mechanical cleaning tool section 30 comprising mechanical cleaning elements 23 for releasing elements, such as scales, of the inner surface of the casing 2. The mechanical cleaning tool section 30 is connected with the nozzle head 16 so that when the cleaning tool 1 moves forwards or backwards in the well, the mechanical cleaning tool section 30 releases the scale or debris of the inner surface 3, and subsequently, the enzyme-containing fluid 4 is ejected from the nozzle head 16 to contact the cleaned surface. Thus, if the cleaning tool 1 is retracted while cleaning and treating the casing, the mechanical cleaning tool section 30 is arranged closest to the top of the well, as shown in Fig. 2, and if the cleaning tool is moving forward while cleaning and treating the casing, the nozzle head 16 is arranged closest to the top of the well, as shown in Fig. 1.

As shown in Fig. 1, the tool further comprises a jetting tool section 17 for contacting the inner surface of the downhole casing with an enzyme. The fluid containing enzymes 4 is contained in a fluid chamber 7 of the jetting tool 17, and after pressurising the chamber 7, either by a pumping device 9 downhole pressurising locally in the jetting tool chamber 7 or by a pumping device uphole (not shown), e.g. pressurising the entire borehole casing above the jetting tool 17, the fluid 4 containing enzymes may be jetted through the nozzle head 16 towards the inner surface 3 of the casing in a jet stream, thereby contacting the inner surface of the casing with an enzyme in the jet stream.

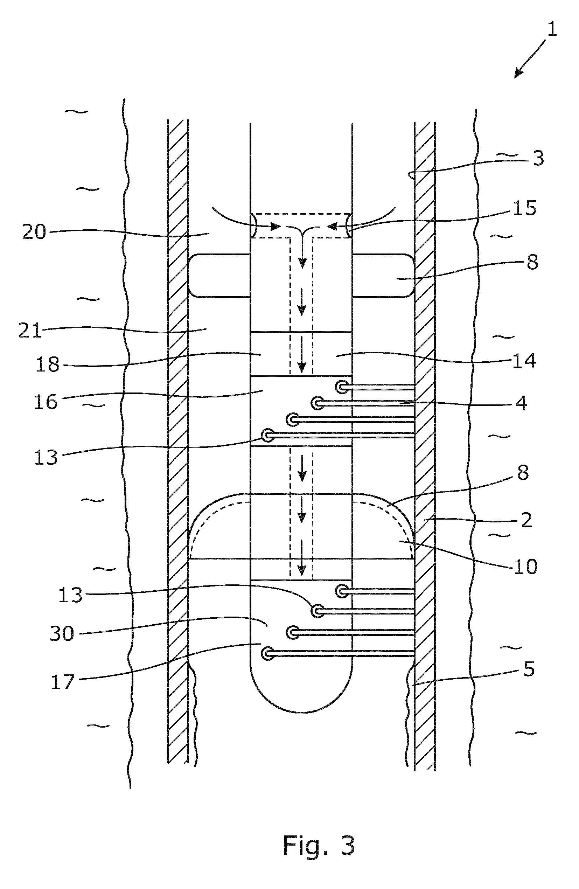

A mechanical cleaning tool section 30 for carrying out the above-mentioned mechanical cleaning using brushes 23 is shown in Fig. 1. The mechanical cleaning tool section 30 may comprise brushes 23 for brushing the interior of the casing downhole in order to clean the casing to become substantially free from rigid debris and other precipitated materials. In another embodiment, the initial step of cleaning the casing to remove rigid debris and other deposit materials, such as scales, may alternatively be carried out by another mechanical cleaning tool section 30 in the form of the jetting tool section 17, as shown in Fig. 3. The jetting tool 17 may be very powerful in removing even rigid debris and other precipitated materials strongly attached to the inner surface of the borehole.

Scale is formed downhole by constituents from the formation and/or from fluid injected into the well. Scale tends to deposit on the inner surface of the casing in a heterogeneous reaction, but by applying enzymes onto the clean inner surface 3, the enzymes react with the scale constituents, causing the scale to form as a homogeneous reaction rather than a heterogeneous reaction. The enzymes thus promote a homogeneous reaction where the scale precipitates in the fluid and does not deposit on the inner surface of the casing. The enzymes for promoting a homogeneous reaction may be ligases.

Fig. 2 shows the cleaning tool 1 comprising a tool housing 14 and an inlet 15 for letting well fluid into the tool 1, and the inlet 15 is arranged inside the tool in fluid communication with the nozzles 13, as illustrated by the dotted lines. The well fluid travels in through the inlet and out through the nozzle head 16, as illustrated by arrows. The well fluid is mixed with the enzyme-containing fluid 4 inside the cleaning tool before being ejected onto the nozzle head 16. The cleaning tool is submerged into the casing 2 in the well, and a flow-hindering element 8 arranged outside the housing 14 is set or inflated so that it divides the casing 3 into a first 20 and a second casing part 21. Thereby, the well fluid in the first casing part 20 can be pressurised, and the fluid is forced into the inlets 15 and out through the nozzles 13. Thus, the second part of the casing 21 has a substantially lower well fluid pressure so that the high-pressurised well fluid in the first part 20 can be ejected as jets in the well fluid in the second part of the casing. The flow-hindering element 8 also has the function of sweeping the inner surface 3 of the casing 2 after the mechanical cleaning tool section 30 has released the scales 5 as the tool 1 is moved forward in the well, forward being downwards in Fig. 2. The flow-hindering element is thus also functioning as a sweeper.

In Fig. 3, the cleaning tool 1 is also submerged into the casing 3 in the well, and the flow-hindering element 8 is arranged outside the housing 14, dividing the casing 3 into the first casing part 20 and the second casing part 21. The well fluid in the first casing part 20 is pressurised, and the fluid is forced into the inlets 15 and out through the nozzles 13 in the jetting tool section 17 for cleaning the surface 3. The well fluid jetted through the jetting tool section 17 is not mixed with the fluid for cleaning the inner surface, as a valve directs part of the fluid into the jetting tool section and not through the chamber. In some embodiments, the cleaning fluid may therefore be fluid from the casing jetted through the nozzles, and not a special cleaning fluid contained in a fluid chamber in the jetting tool section 17. The other part of the fluid is directed into the mixing chamber to be mixed with the enzyme-containing fluid 4 and ejected through the nozzle head 16 to contact the clean inner surface with enzymes. The sweeper 10 arranged between the jetting tool section 17 and the nozzle head 16 sweeps the inner surface from released scale 5 before the surface is contacted by enzymes.

The cleaning tool of Fig. 3 further comprises a hydraulic control unit 18 for controlling rotation of the nozzle head. The jetting tool section may in a similar manner comprise a hydraulic control unit 18 for controlling the nozzle head of the jetting tool section 17. The hydraulic control unit may comprise an electric motor for breaking the free rotation of the nozzle head. Having a hydraulic control unit for controlling which nozzles are ejecting fluid ensures that the nozzles not facing the object to be cleaned are not ejecting fluid and that all the pressure in the fluid is used for ejecting fluid through the nozzle or nozzles facing the object to be cleaned. Thus, no energy of the pressurised fluid is wasted on nozzles not facing the object to be cleaned, and/or no energy is wasted on rotating the nozzle head. Furthermore, by controlling which nozzle/nozzles is/are allowed to eject fluid, it is possible to ensure that only one or few of the nozzles is/are in fact ejecting fluid, and the pressure of the fluid ejected from that or these nozzles is thus significantly higher than if the fluid was ejected through all the nozzles at the same time, even if the object is extending along the entire circumference of the casing. In this way, each nozzle is able to clean harder materials, such as scales, than nozzles of prior art tools where most of the energy of the pressurised fluid is used for rotating the nozzles.

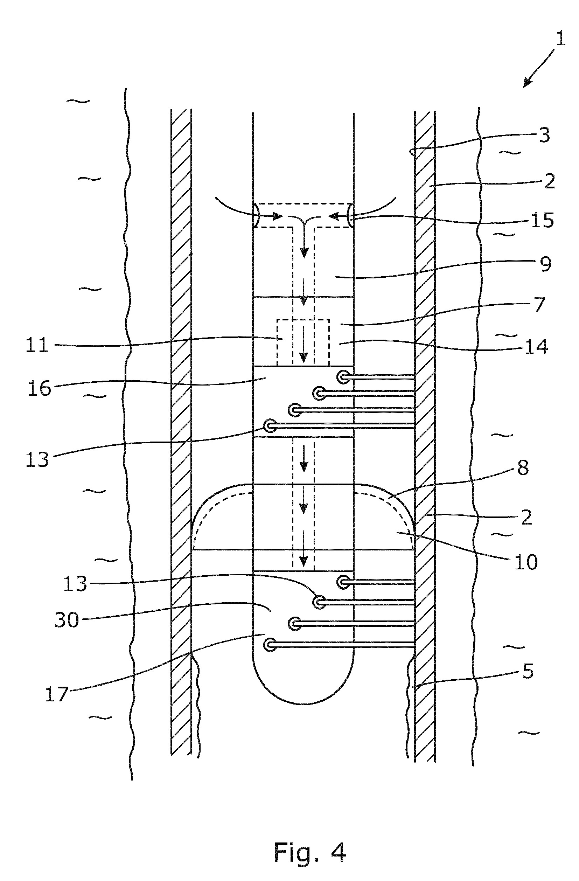

In Fig. 4, the pumping device 9 pumps fluid into the tool 1, which fluid is subsequently mixed with enzymes from the chamber 7 in the mixing chamber 11 before being ejected through the nozzle head 16.

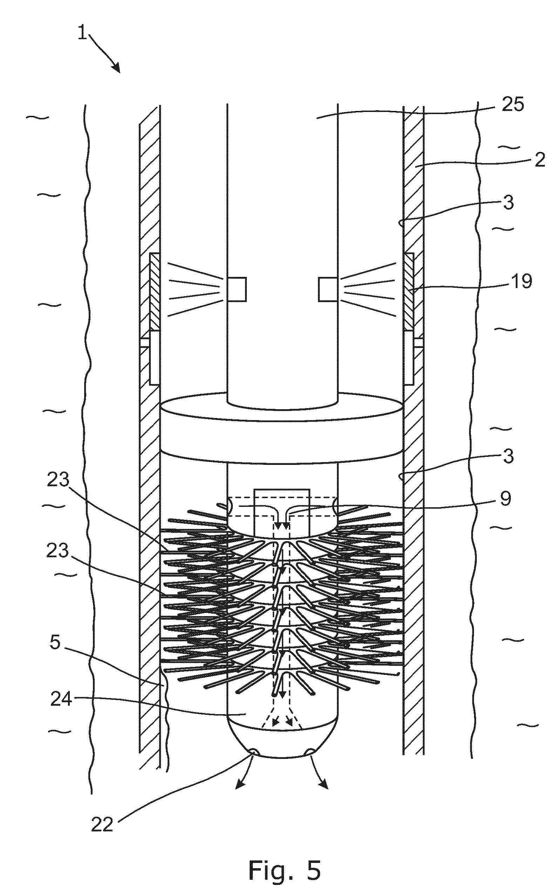

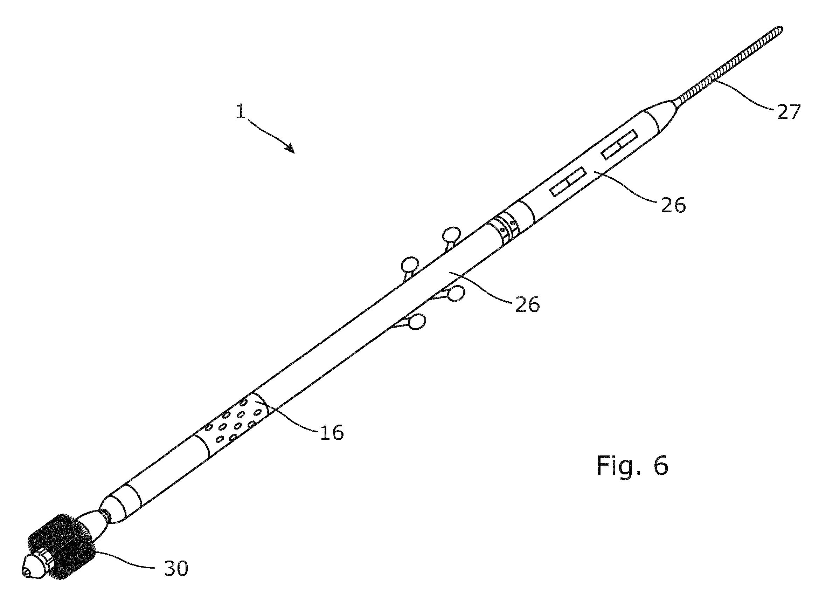

Scale may cause clogging or malfunction of a mechanical device, such as a sliding sleeve downhole. Scale depositing on mechanical devices may be inhibited by contacting the mechanical device with an enzyme-containing fluid by means of the tool 1, as shown in Fig. 5. The sliding sleeve 19 and the inner surface 3 of the casing are cleaned by brushes which are made of cut plates but may in another embodiment be made of wires extending radially outwards, as shown in Fig. 6. The mechanical cleaning tool section of Fig. 5 comprises a pumping device 9 for pumping fluid containing elements released by the brushes and ejecting the fluid through an outlet 22 of a first end 24 or a second end 25 of the cleaning tool.

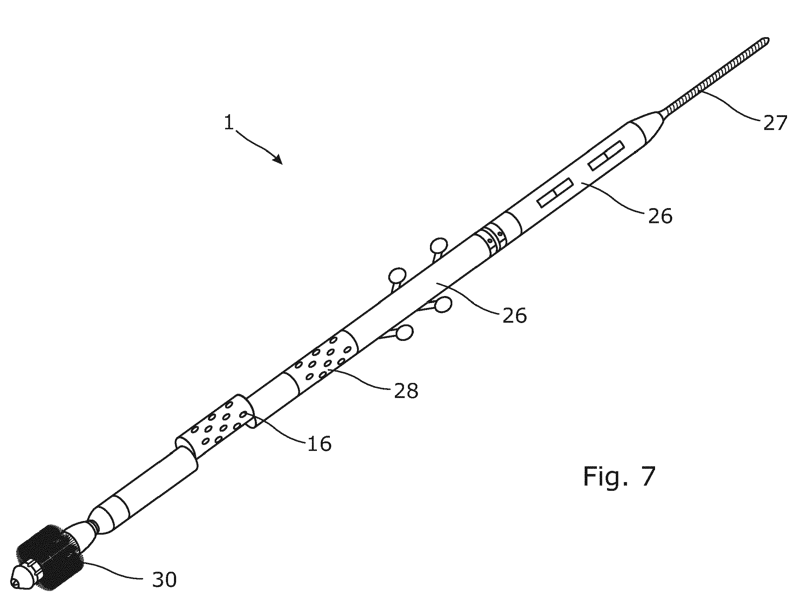

As shown in Fig. 7, the nozzle head 16 is extendable radially from the tool housing for contacting the inner surface of the casing with the enzyme-containing fluid. In Fig. 6, the nozzle head 16 is in its retracted position, and in Fig. 7, the nozzle head 16 is in its projected position, extending radially outwards from the tool axis. The cleaning tool 1 of Figs. 6 and 7 comprises two driving units 26 powered by a wireline 27 for propelling the tool forward in the casing.

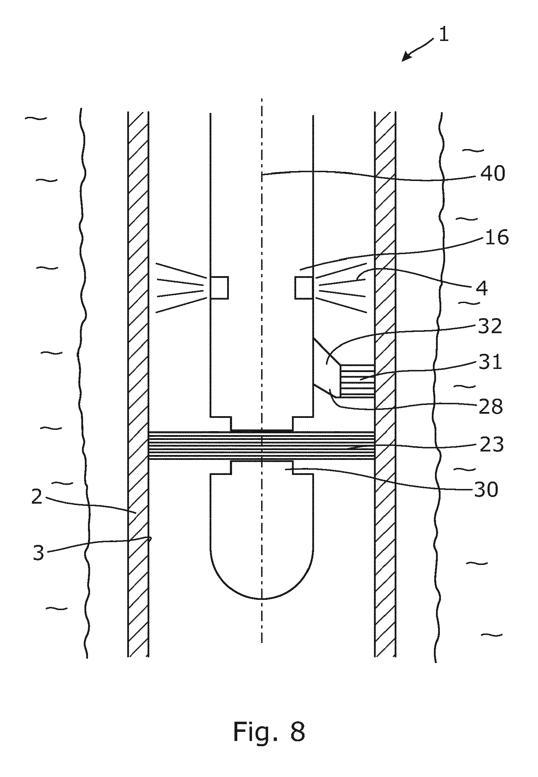

In Fig. 7, the cleaning tool further comprises a coating tool section 28 for coating the inner surface of the casing. In Fig. 8, the coating tool section 28 comprises a brush 31 arranged on a projectable brush arm 32, and coating is ejected through openings in the brush while the brush arm is rotated around a tool axis 40 for contacting the inner surface 3 of the casing 2 with the coating. The brush thus coats the cleaned inner surface of the casing before the enzyme-containing fluid 4 is ejected to contact the inner surface.

The tool may further comprise a wax fluid chamber comprising fluid containing wax particles which, like the coating, is applied to the surface of the casing before the casing is treated with enzymes. The wax particles may comprise ceramic particles having a significantly higher density than the wax so that the wax particles may be ejected through nozzles or ejecting members 6 to contact the inner surface of the casing. The wax particles may also comprise magnetic particles, and the ejected wax particles comprising magnetic particles are thus retained near the casing wall due to magnetic attraction between the casing and the magnetic particles.

The enzyme-containing fluid may also contain wax, adhesive or similar constituents to be able to adhere to the inner surface. The enzymes are then slowly "washed off" or "abraded" and mixed with the well fluid to promote a homogeneous reaction, and scales are thus formed in the well fluid and drops to the bottom of the well in a vertical well.

The nozzles of the nozzle head may be angled in relation to a radial direction of the nozzle head being perpendicular to the tool axis. The nozzles are arranged in rows and along a circumference of the nozzle head with a mutual circumferential distance. By angling the nozzles, the rotation of the nozzle head is provided by the pressurised fluid.

Due to elevated downhole temperatures, enzymes are preferably thermophile or hyperthermophile in order to withstand temperatures above 50 degrees Celsius, such as above 60 degrees Celsius, such as above 70 degrees Celsius, such as above 80 degrees Celsius, such as above 90 degrees Celsius, such as above 100 degrees Celsius, such as above 110 degrees Celsius, such as above 120 degrees Celsius, such as above 130 degrees Celsius, such as above 140 degrees Celsius, such as above 150 degrees Celsius, such as even above 200 degrees Celsius.

As known from examples such as an ordinary carwash, a wax layer may be arranged on a cleaned surface to extend the period of maintaining a clean surface and to inhibit corrosion effects. Applying wax to a surface in a downhole environment is, however, a much more difficult task due to the nature of the downhole environment being a casing filled with various fluids, e.g. drilling muds, oil, water, acid, etc. Therefore, application of a light and relatively volatile substance, such as a wax, is quite difficult. However, by injecting wax particles into a pressurised fluid chamber of the jetting tool section 17 and subsequently ejecting them towards the inner surface of the borehole casing in a jet stream may enable the user to arrange a layer of wax on the inner surface.

Furthermore, experiments have shown that in very troublesome conditions, such as during high fluid flow rates in the borehole casing, very good results have been obtained by encapsulating relatively heavy ceramic particles, such as aluminium oxide particles encapsulated in wax, thereby constituting a ceramic carrier material and ejecting these wax-encapsulated ceramic particles towards the inner surface of the borehole casing. These wax-encapsulated ceramic particles are much more easily directed through a flowing fluid, such as by the jetting stream, in order to reach the inner surface of the borehole casing or other mechanical parts, preferably to be covered by a wax layer after cleaning and application of enzyme since the density of the wax may be significantly increased by the ceramic carrier material. The particles may also be made of another suitable material, such as metals, alloys, etc.

Furthermore, experiments have also shown that extension of the period wherein the surface is clean by applying a wax layer may be prolonged by adding magnetic particles also encapsulated by wax to increase adherence to the inner surface of the borehole casing by magnetic attraction between particles and casing, when the casing is magnetic.

Other materials such as nano-scaled materials, e.g. self-assembling nanotube layers, graphene layers, nano-crystalline thin films, etc., may be used to cover the inner surface of the borehole casing or mechanical casing parts, such as sliding sleeves, in order to avoid or inhibit rigid debris, precipitated materials and scale. The nano-scaled materials may be applied to the casing components before mounting the casing parts in the borehole or before the nano-scaled materials are applied downhole by a downhole tool, such as a jetting tool section. The nano-scaled materials may comprise enzymes diffusing slowly to the surface facing the well fluid in the casing and thus mixing with the well fluid.

The preparation of casing part surfaces may include application of nano-scaled materials on pipes, tubes, valves, plugs, collars which may come into contact with borehole fluids.

By well fluid is meant any kind of fluid that may be present in oil or gas wells downhole, such as natural gas, oil, oil mud, crude oil, water, etc. By gas is meant any kind of gas composition present in a well, completion, or open hole, and by oil is meant any kind of oil composition, such as crude oil, an oil-containing fluid, etc. Gas, oil, and water fluids may thus all comprise other elements or substances than gas, oil, and/or water, respectively.

By a casing is meant any kind of pipe, tubing, tubular, liner, string etc. used downhole in relation to oil or natural gas production.

In the event that the tool is not submergible all the way into the casing, a downhole tractor can be used to push the tool all the way into position in the well. The downhole tractor may have projectable arms having wheels, wherein the wheels contact the inner surface of the casing for propelling the tractor and the tool forward in the casing. A downhole tractor is any kind of driving tool capable of pushing or pulling tools in a well downhole, such as a Well Tractor®. Although the invention has been described in the above in connection with preferred embodiments of the invention, it will be evident for a person skilled in the art that several modifications are conceivable without departing from the invention as defined by the following claims.

## Claims

1. A cleaning tool (1) for cleaning and treating an inner surface (3) of a downhole casing (2), comprising:
- a tool housing (14),
- a mechanical cleaning tool section (30) comprising mechanical cleaning elements for releasing elements of the inner surface of the casing in order to clean the casing to become substantially free from rigid debris and other precipitated materials, and
- a jetting tool section (17) for ejecting an enzyme-containing fluid (4) onto the cleaned inner surface, comprising:
- a fluid chamber (7) comprising the enzyme-containing fluid, and
- a nozzle head (16) comprising at least one nozzle (13),
**characterised in that** the jetting tool comprises a pumping device (9) for pressurising the fluid before the fluid is let out through the nozzle head.

2. A cleaning tool according to claim 1, further comprising a flow-hindering element (8) arranged outside the housing (14), expandable against the inner surface of the casing so as to divide the casing (3) into a first casing part (20) and a second casing part (21).

3. A cleaning tool according to claim 2, wherein the flow-hindering element is a sweeper (10) sweeping the inner surface of the casing after the mechanical cleaning tool section has released elements of the inner surface.

4. A cleaning tool according to any of the preceding claims, wherein the mechanical cleaning elements are brushes (23).

5. A cleaning tool according to any of the preceding claims, further comprising an inlet (15) for letting well fluid into the tool (1), which inlet is in fluid communication with the nozzle through a valve (12) so as to clean the inner surface before the inner surface is treated with enzyme-containing fluid.

6. A cleaning tool according to any of the preceding claims, wherein the nozzle head is extendable radially from the tool housing for contacting the inner surface of the casing with the enzyme-containing fluid.

7. A cleaning tool according to any of the preceding claims, wherein the jetting tool further comprises a hydraulic control unit (18) for controlling rotation of the nozzle head.

8. A cleaning tool according to any of the preceding claims, wherein the mechanical cleaning tool section comprises a pumping device for pumping fluid containing elements released by the brushes and ejecting the fluid through an outlet (22) of a first end (24) or a second end (25) of the cleaning tool.

9. A cleaning tool according to any of the preceding claims, further comprising a coating tool section (28) for coating the inner surface of the casing.

10. A cleaning tool according to any of the preceding claims, further comprising a driving unit (26) for propelling the tool forward in the casing.

11. A method for treating an inner surface of a casing by means of the cleaning tool according to any of the preceding claims, wherein the contact of the inner surface of the downhole casing with an enzyme comprises the steps of:
- providing an enzyme-containing fluid in the fluid chamber of the jetting tool (17),
- cleaning the casing to remove rigid debris and other precipitated materials, such as scales, by applying a mechanical cleaning tool section comprising brushes for brushing the inner surface of a casing downhole in order to clean the casing to become substantially free from any elements, such as rigid debris and other precipitated materials,
- jetting the fluid through the nozzle head towards the inner surface of the casing in a jet stream, and
- contacting the inner surface of the casing with the
enzyme-containing fluid in a jet stream.

12. A method according to claims 11, further comprising a final step of arranging a wax layer on the inner surface of the casing, comprising the steps of:
- providing a fluid containing wax particles in a first casing part,
- activating a pumping device and pressurising the first casing part,
- jetting the fluid containing wax particles through the nozzle head towards the inner surface of the casing in the second casing part in a jet stream, and
- arranging the wax layer on the inner surface of the casing by the jet stream.

13. A method according to claim 11 or 12, further comprising a final step of arranging a layer of nanoparticles on the inner surface of the casing, comprising the steps of:
- providing a liquid containing nanoparticles in a first casing part,
- activating a pumping device and pressurising the first casing part,
- jetting the liquid through a nozzle head towards the inner surface of the casing in the second casing part in a jet stream, and
- arranging the layer of nanoparticles on the inner surface of the casing by the jet stream.

14. A method according to any of claims 11-13, further comprising an initial step of preparing surfaces of downhole casing parts, such as casings, pipes, tubes, valves, plugs and collars, which may come into contact with borehole fluids, comprising the steps of:
- coating an inner surface of a casing part with a nanocover material, and
- mounting the coated casing part to the casing.

## Patentansprüche

1. Reinigungswerkzeug (1) zum Reinigen und Behandeln einer Innenfläche (3) einer Bohrloch-Verrohrung (2), Folgendes umfassend:
- ein Werkzeuggehäuse (14),
- einen Abschnitt (30) für ein mechanisches Reinigungswerkzeug, der mechanische Reinigungselemente zum Lösen von Elementen von der Innenfläche der Verrohrung umfasst, um dadurch die Verrohrung zu reinigen, damit sie im Wesentlichen frei von festen Gesteinstrümmern und anderen ausgefällten Materialien wird, und
- einen Bespritzungswerkzeugabschnitt (17) zum Ausstoßen eines enzymhaltigen Fluids (4) auf die gereinigte Innenfläche, Folgendes umfassend:
- eine Fluidkammer (7), die das enzymhaltige Fluid umfasst, und
- einen Düsenkopf (16), der wenigstens eine Düse (13) umfasst,
**dadurch gekennzeichnet, dass** das Bespritzungswerkzeug eine Pumpvorrichtung (9) umfasst, um das Fluid unter Druck zu setzen, bevor das Fluid durch den Düsenkopf ausgestoßen wird.

2. Reinigungswerkzeug nach Anspruch 1, das außerdem ein Fluss-Aufhalteelement (8) umfasst, das außerhalb des Gehäuses (14) angeordnet ist und das gegen die Innenfläche der Verrohrung derart expandierbar ist, dass die Verrohrung (3) in einen ersten Verrohrungsteil (20) und einen zweiten Verrohrungsteil (21) unterteilt wird.

3. Reinigungswerkzeug nach Anspruch 2, wobei das Fluss-Aufhalteelement eine Kehrvorrichtung (10) ist, die die Innenfläche der Verrohrung kehrt nachdem der Abschnitt für ein mechanisches Reinigungswerkzeug Elemente von der Innenfläche gelöst hat.

4. Reinigungswerkzeug nach einem der vorhergehenden Ansprüche, wobei die mechanischen Reinigungselemente Bürsten (23) sind.

5. Reinigungswerkzeug nach einem der vorhergehenden Ansprüche, das außerdem einen Einlass (15) umfasst, um Bohrlochfluid in das Werkzeug (1) hineinzulassen, wobei der Einlass durch ein Ventil (12) in Fluidkommunikation mit der Düse steht, um die Innenfläche zu reinigen bevor die Innenfläche mit dem enzymhaltigen Fluid behandelt wird.

6. Reinigungswerkzeug nach einem der vorhergehenden Ansprüche, wobei der Düsenkopf vom Werkzeuggehäuse radial ausgefahren werden kann, um die Innenfläche der Verrohrung mit dem enzymhaltigen Fluid in Kontakt zu bringen.

7. Reinigungswerkzeug nach einem der vorhergehenden Ansprüche, wobei das Bespritzungswerkzeug außerdem eine hydraulische Steuereinheit (18) zur Steuerung der Drehung des Düsenkopfs umfasst.

8. Reinigungswerkzeug nach einem der vorhergehenden Ansprüche, wobei der Abschnitt für ein mechanisches Reinigungswerkzeug eine Pumpvorrichtung umfasst, um Fluid zu pumpen, das Elemente enthält, die von den Bürsten gelöst wurden, und um das Fluid durch einen Auslass (22) an einem ersten Ende (24) oder einem zweiten Ende (25) des Reinigungswerkzeugs auszustoßen.

9. Reinigungswerkzeug nach einem der vorhergehenden Ansprüche, das außerdem einen Beschichtungswerkzeugabschnitt (28) zum Beschichten der Innenfläche der Verrohrung umfasst.

10. Reinigungswerkzeug nach einem der vorhergehenden Ansprüche, das außerdem eine Antriebseinheit (26) umfasst, um das Werkzeug in der Verrohrung vorwärts anzutreiben.

11. Verfahren zum Behandeln einer Innenfläche einer Verrohrung mittels des Reinigungswerkzeugs nach einem der vorhergehenden Ansprüche, wobei der Kontakt der Innenfläche der Bohrloch-Verrohrung mit einem Enzym folgende Schritte umfasst:
- Bereitstellen eines enzymhaltigen Fluids in der Fluidkammer des Bespritzungswerkzeugs (17),
- Reinigen der Verrohrung, um feste Gesteinstrümmer und andere ausgefällte Materialien, wie etwa Ablagerungen, zu beseitigen, indem ein Abschnitt für ein mechanisches Reinigungswerkzeug angewendet wird, der Bürsten zum Abbürsten der Innenfläche einer Verrohrung unten im Bohrloch umfasst, um die Verrohrung zu reinigen, damit diese im Wesentlichen frei von jeglichen Elementen wird, wie etwa festen Gesteinstrümmern und anderen ausgefällten Materialien,
- Spritzen des Fluids durch den Düsenkopf in Richtung der Innenfläche der Verrohrung in einem Strahlstrom, und
- in Kontakt Bringen der Innenfläche der Verrohrung mit dem enzymhaltigen Fluid in einem Strahlstrom.

12. Verfahren nach Anspruch 11, das außerdem einen am Ende anschließenden Schritt zum Einrichten einer Wachsschicht auf der Innenfläche der Verrohrung umfasst, wobei dieser die folgenden Schritte umfasst:
- Bereitstellen eines Fluids, das Wachspartikel enthält, in einem ersten Verrohrungsteil,
- Aktivieren einer Pumpvorrichtung und unter Druck Setzen des ersten Verrohrungsteils,
- Spritzen des Fluids, das Wachspartikel enthält, durch den Düsenkopf in Richtung der Innenfläche der Verrohrung im zweiten Verrohrungsteil in einem Strahlstrom, und
- Einrichten der Wachsschicht auf der Innenfläche der Verrohrung durch den Strahlstrom.

13. Verfahren nach Anspruch 11 oder 12, das außerdem einen am Ende anschließenden Schritt zum Einrichten einer Schicht aus Nanopartikeln auf der Innenfläche der Verrohrung umfasst, wobei dieser die folgenden Schritte umfasst:
- Bereitstellen einer Flüssigkeit, die Nanopartikel enthält, in einem ersten Verrohrungsteil,
- Aktivieren einer Pumpvorrichtung und unter Druck Setzen des ersten Verrohrungsteils,
- Spritzen der Flüssigkeit durch einen Düsenkopf in Richtung der Innenfläche der Verrohrung im zweiten Verrohrungsteil in einem Strahlstrom, und
- Einrichten der Schicht aus Nanopartikeln auf der Innenfläche der Verrohrung durch den Strahlstrom.

14. Verfahren nach einem der Ansprüche 11 bis 13, das außerdem einen anfänglichen Schritt zum Herrichten von Oberflächen von Verrohrungsteilen unten im Bohrloch umfasst, wie etwa Verrohrungen, Leitungen, Röhren, Ventilen, Verschlüssen und Muffen, die in Kontakt mit Bohrlochfluids kommen können, die folgenden Schritte umfassend:
- Beschichten einer Innenfläche eines Verrohrungsteils mit einem Nanobeschichtungsmaterial, und
- Anbringen des beschichteten Verrohrungsteils an der Verrohrung.

## Revendications

1. Outil de nettoyage (1) pour nettoyer et traiter une surface intérieure (3) d'un tubage de fond de trou (2), comprenant :
un logement d'outil (14),
une section d'outil de nettoyage mécanique (30) comprenant des éléments de nettoyage métalliques pour détacher des éléments de la surface intérieure du tubage afin de nettoyer le tubage pour le rendre sensiblement libre de débris rigides et autres matériaux précipités, et
une section d'outil de projection (17) pour éjecter un fluide contenant des enzymes (4) sur la surface intérieure nettoyée, comprenant :
une chambre de fluide (7) contenant le fluide contenant des enzymes, et
une tête de buse (16) comprenant au moins une buse (13),
**caractérisé en ce que** l'outil de projection comprend un dispositif de pompage (9) pour mettre sous pression le fluide avant que le fluide soit sorti par la tête de buse.

2. Outil de nettoyage selon la revendication 1, comprenant en outre un élément de stoppage d'écoulement (8) agencé à l'extérieur du logement (14), pouvant être étendu contre la surface intérieure du tubage de façon à diviser le tubage (3) en une première partie de tubage (20) et une seconde partie de tubage (21).

3. Outil de nettoyage selon la revendication 2, dans lequel l'élément de stoppage d'écoulement est un balayeur (10) balayant la surface intérieure du tubage après que la section d'outil de nettoyage mécanique a détaché des éléments de la surface intérieure.

4. Outil de nettoyage selon l'une quelconque des revendications précédentes, dans lequel les éléments de nettoyage métalliques sont des brosses (23).

5. Outil de nettoyage selon l'une quelconque des revendications précédentes, comprenant en outre un orifice d'entrée (15) pour laisser du fluide de puits dans l'outil (1), lequel orifice d'entrée est en communication fluide avec la buse par une soupape (12) de façon à nettoyer la surface intérieure avant que la surface intérieure soit traitée avec le fluide contenant des enzymes.

6. Outil de nettoyage selon l'une quelconque des revendications précédentes, dans lequel la tête de buse peut être étendue radialement depuis le logement d'outil pour faire entrer en contact le fluide contenant des enzymes avec la surface intérieure du tubage.

7. Outil de nettoyage selon l'une quelconque des revendications précédentes, dans lequel l'outil de projection comprend en outre une unité de commande hydraulique (18) pour commander la rotation de la tête de buse.

8. Outil de nettoyage selon l'une quelconque des revendications précédentes, dans lequel la section d'outil de nettoyage mécanique comprend un dispositif de pompage pour pomper du fluide contenant des éléments libérés par les brosses et éjecter le fluide par un orifice de sortie (22) d'une première extrémité (24) ou d'une seconde extrémité (25) de l'outil de nettoyage.

9. Outil de nettoyage selon l'une quelconque des revendications précédentes, comprenant en outre une section d'outil de revêtement (28) pour revêtir la surface intérieure du tubage.

10. Outil de nettoyage selon l'une quelconque des revendications précédentes, comprenant en outre une unité d'entraînement (26) pour propulser l'outil vers l'avant dans le tubage.

11. Procédé pour traiter une surface intérieure d'un tubage au moyen de l'outil de nettoyage selon l'une quelconque des revendications précédentes, dans lequel le contact de la surface intérieure du tubage de fond de trou avec des enzymes comprend les étapes consistant à :
fournir un fluide contenant des enzymes dans la chambre de fluide de l'outil de projection (17),
nettoyer le tubage pour enlever des débris rigides et autres matériaux précipités, comme de incrustations, en appliquant une section d'outil de nettoyage mécanique comprenant des brosses pour brosser la surface intérieure d'un tubage de fond de trou afin de nettoyer le tubage pour le rendre sensiblement libre de tout élément, comme des débris rigides et autres matériaux précipités,
projeter le fluide à travers la tête de buse vers la surface intérieure du tubage dans un jet, et
faire entrer en contact le jet de fluide contenant un enzyme avec la surface intérieure du tubage.

12. Procédé selon la revendication 11, comprenant en outre une étape finale consistant à agencer une couche de cire sur la surface intérieure du tubage, comprenant les étapes consistant à :
fournir un fluide comprenant des particules de cire dans une première partie de tubage,
activer un dispositif de pompage et mettre sous pression la première partie de tubage,
éjecter le fluide comprenant des particules de cire à travers la tête de buse vers la surface intérieure du tubage dans la seconde partie de tubage dans un jet, et
agencer la couche de cire sur la surface intérieure du tubage par le jet.

13. Procédé selon la revendication 11 ou 12, comprenant en outre une étape finale consistant à agencer une couche de nanoparticules sur la surface intérieure du tubage, comprenant les étapes consistant à :
fournir un liquide contenant des nanoparticules dans une première partie de tubage,
activer un dispositif de pompage et mettre sous pression la première partie de tubage,
éjecter le liquide à travers une tête de buse vers la surface intérieure du tubage dans la seconde partie de tubage dans un jet, et
agencer la couche de nanoparticules sur la surface intérieure du tubage par le jet.

14. Procédé selon l'une quelconque des revendications 11-13, comprenant en outre une étape initiale consistant à préparer des surfaces de parties de tubage de fond de trou, comme des tubages, des tuyaux, des tubes, des soupapes, des bouchons et des colliers, qui peuvent venir en contact avec des fluides de trou de forage, comprenant les étapes consistant à :
revêtir une surface intérieure d'une partie de tubage avec un matériau de nano-revêtement, et
monter la partie de tubage revêtue sur le tubage.
